# EUROPEAN PATENT APPLICATION

(11) **EP 4 700 272 A1**
(43) Date of publication of application: **25.02.2026**
(21) Application number: 24195591.3
(22) Date of filing: 21.08.2024
(51) Int. Cl.: F17C 6/00

(54) **PRESSURISATION METHOD FOR PRESSURISING A PROPELLANT TANK, FILLING METHOD, TANK ASSEMBLY, FILLING SYSTEM, AND SPACECRAFT**

(71) Applicant: ArianeGroup GmbH, 82024 Taufkirchen (DE)
(72) Inventor: Hessel, Christian, 28199 Bremen (DE)
(74) Representative: Marschall, Stefan

(57) **Abstract**

Disclosed is a pressurisation method for increasing a pressure within a propellant tank 10, 10', 10", 10‴ containing hydrogen peroxide H₂O₂. The pressurisation method comprises irradiating at least some of the hydrogen peroxide H₂O₂ with ultraviolet light L emitted by at least one ultraviolet light source 20, 20', 20", 20‴. Thereby, a photolysis is actively provoked which causes the irradiated hydrogen peroxide H₂O₂ to at least partially decompose into water H₂O and gaseous oxygen O₂.

Further disclosed are a filling method for at least partially filling a receiving propellant tank 10_{V} by applying such pressurisation method, a tank assembly 1, 1', 1", 1‴, a filling system 1_{F}, and a spacecraft.

## Description

The present invention concerns a pressurisation method for pressurising a propellant tank containing hydrogen peroxide. The invention further directs at a filling method for at least partially filling a (receiving) propellant tank. Moreover, the invention concerns a tank assembly, a filling system, and a spacecraft.

Propellant tanks contain liquid propellant either in cryogenic conditions or in storable conditions as a fuel or oxidizer. Conventionally, they are often pressurised with inert gas to provide an associated supply system with the required pressure conditions to supply the propellant to the respective consumer(s) (e.g. engine(s) and/or thruster(s)).

Therein, the inert gas may originate from an external high-pressure vessel, for instance. Additionally or alternatively, a gas resulting from an exhaust or a decomposition product of at least one gas generator can be used as a pressurant, such concept being known as "autogenous" pressurisation. For example, in applications for cryogenic systems where the liquefied gas is a propellant, or in applications for storable systems where the decomposed pressurant is a propellant of a spacecraft, the thus used gas generator may form part of a drive cycle of an engine of the spacecraft.

It is an object of the present invention to facilitate an alternative concept for pressurising a propellant tank. Further objects of the present invention are to facilitate an improved filling of a propellant tank, and to provide an improved spacecraft.

The objects are achieved by a pressurisation method according to claim 1, a filling method according to claim 8, a tank assembly according to claim 9, a filling system according to claim 14, and a spacecraft according to claim 15. Advantageous embodiments are disclosed in the dependent claims, the description, and the figures.

A pressurisation method according to the present invention serves to increase a pressure within a propellant tank (which may be a plain tank or a bladder tank) containing hydrogen peroxide; when the relation is clear, the pressurisation method is also referred to herein shortly as "method" only. The pressurisation method comprises irradiating at least some (i.e., at least a sub-amount) of the hydrogen peroxide within the propellant tank with ultraviolet light emitted by at least one ultraviolet light source, thereby provoking a photolysis of at least some of the hydrogen peroxide into water and gaseous oxygen.

A tank assembly according to the present invention comprises a propellant tank configured to contain hydrogen peroxide; therein, the propellant tank may be a plain tank or a bladder tank. The tank assembly further comprises at least one ultraviolet light source configured to emit ultraviolet light for irradiation, in a situation in which the propellant tank contains hydrogen peroxide, of at least some of the hydrogen peroxide. In particular, the tank assembly according to the present invention is preferably configured to carry out a pressurisation method according to an embodiment of the present invention.

The propellant tank respectively may be configured as a storage tank. It may or may not be configured as a pressure vessel (thus, as a high-pressure tank).

As is to be understood, the hydrogen peroxide at least some of which is irradiated by ultraviolet light, also referred to herein briefly as the "irradiated hydrogen peroxide", may at least temporarily comprise a first sub-amount hit by the ultraviolet light and a second sub-amount not reached by the ultraviolet light, wherein the first and the second sub-amounts may be in a fluid connection with each other and thus may at least partially interchange by liquid flow. For instance, a penetration depth of the ultraviolet light may at least temporarily be smaller than a respective extension of the irradiated hydrogen peroxide within the propellant tank, such that the ultraviolet light does not penetrate all of the irradiated hydrogen peroxide. A portion of the hydrogen peroxide which is within the penetration depth may then be considered as said first sub-amount, and a hydrogen peroxide portion beyond the penetration depth may be considered as said second sub-amount. As known in the art, such penetration depth depends on a power of the at least one ultraviolet light source, and on wavelengths of the ultraviolet light it emits.

In particular, the at least one ultraviolet light source may irradiate, or be configured to irradiate, respectively, a boundary layer of a liquid surface of the hydrogen peroxide, or a boundary layer of the liquid hydrogen peroxide surrounding the ultraviolet light source.

By providing for the irradiating, the present invention thus utilises actively provoking a photolysis of hydrogen peroxide within the propellant tank. As other peroxides, hydrogen peroxide (H₂O₂) includes a rather weak O-O-structure which is susceptible for light or heat. Under the influence of light, hydrogen peroxide spontaneously decomposes, in an exothermic reaction, into water and oxygen. The reaction is exceedingly efficient if the light is ultraviolet light, in particular having a wavelength smaller than 380nm.

In technical fields different from the present invention, the photolysis has emerged to be suitable in activities of organic synthesis (for example, to induce oxygenic functional groups into organic chemical combinations), or in the domain of purification of water (e.g., as an advanced oxidation process) from not or at least hardly biodegradable pollutants such as pesticides, biocides, or drugs. Indeed, the primary reactions of the photolysis induce the generation of radicals of hydroxide being the strongest radicals existing in aqueous system, resulting in a strongly oxidating effect of the ultraviolet oxidation. In particular, the photolysis is conventionally utilised to purify industrial effluent of chemical and pharmaceutic industry, wherein the pollutants are mineralised in mostly stable inorganic combinations such as H₂O, CO₂, and salts. In these cases, the hydrogen peroxide is typically solved in an aqueous solution with a high water content (and thus a low hydrogen peroxide concentration).

The present invention adopts the photolytic process in the field of active pressurisation. Therein, advantage is taken of the fact that said decomposition products have a larger volume than the hydrogen peroxide they originate from, which causes the pressure within the propellant tank to raise.

Therein, the hydrogen peroxide may be solved, with a high concentration, in an aqueous solution contained in the propellant tank. For example, with regard to percentage per weight (wt.%), the content of hydrogen peroxide in such solution may in particular be at least 70 wt.%, at least 80 wt.%, at least 90 wt.%, or even at least 97 wt.%. In particular, the hydrogen peroxide (or more precisely, the aqueous solution containing it) thus may be a high test peroxide (HTP). Specifically, it may be usable in a space application, such as for driving an engine of a spacecraft.

The inventive pressurisation method and the inventive tank assembly facilitate provoking the pressurisation with a particularly compact and lightweight construction of the involved system components. In particular, transfer pumps as well as components for conditioning a particular pressure state within the propellant tank can at least partially be omitted. Moreover, the pressurisation method and the tank assembly according to the present invention facilitate a reduction of a number of different fluids and their respective interfaces involved, in particular, they allow for avoiding the utilisation of inert gases for pressurising. This is advantageous in particular in re-usable systems.

The at least one ultraviolet light source utilised in a pressurisation method according to the present invention or comprised by a tank assembly according to the present invention, respectively, may be at least partially arranged within the propellant tank, at least partially integrated in a tank wall of the propellant tank, or it may be at least partially arranged outside the propellant tank. In the latter case, at least some of the ultraviolet light emitted by the at least one ultraviolet light source may run through a portion of the propellant tank wall which is permeable for ultraviolet light.

According to advantageous embodiments of the present invention, the at least one ultraviolet light source is at least partially covered by a protection which is transparent for ultraviolet light, i.e., which unhamperedly lets the ultraviolet light pass through and which has an ultraviolet light permeability of at least 90% or at least 95% or at least 97%. The protection may be configured to protect the at least one ultraviolet light against breakage and/or impacts of the hydrogen peroxide. The protection may in particular be made of fluorinated ethylene propylene, a perfluoroalkoxy alkane, a transparent metal which is compatible with hydrogen peroxide, and/or a transparent ceramic which is compatible with hydrogen peroxide.

The pressurisation method according to the present invention may preferably comprise controlling the photolysis by selectively switching the at least one ultraviolet light source off or on, and/or by controlling a dimmer (reducing an output of ultraviolet light) the at least one ultraviolet light source may comprise. In particular, the pressurisation method may comprise monitoring a pressure within the propellant tank. For example, the at least one ultraviolet light source may be switched off or dimmed when the pressure reaches a predefined upper pressure bound, and/or it may be switched on or made brighter when the pressure reaches a predefined lower pressure bound or when propellant the propellant tank may comprise (as detailed below) is to be pressed out of the propellant tank, e.g., to be supplied to a consuming unit such as an engine.

The tank assembly according to the present invention may analogously be configured to control the photolysis by selectively switching the at least one ultraviolet light source off or on. In particular, it may comprise a tank pressure control system configured to automatically switch the at least one ultraviolet light source off when a pressure reaches a predefined upper pressure bound, and/or to switch the at least one ultraviolet light source on when the pressure reaches a predefined lower pressure bound or when propellant the propellant tank may comprise (as detailed below) is to be pressed out of the propellant tank, e.g., to be supplied to a consuming unit such as an engine. In particular, the tank pressure control system may thus be configured to provide for the pressure within the propellant tank being in a predefined range. The pressure control system in particular may comprise at least one pressure sensor configured to measure a pressure within the propellant tank.

The propellant tank pressurised according to the pressurisation method or comprised by a tank assembly according to the present invention may contain a propellant; such propellant may be designated to be supplied from the propellant tank to a (further) propellant vessel, or to a consumer unit such as an engine, for example an engine of a vehicle, more specifically, an engine of a spacecraft. In particular, the propellant tank may be a propellant tank of a spacecraft. The pressurisation method may in particular be carried out under weightlessness, in particular during a manoeuvre, a ballistic phase and/or during a boost phase, and the tank assembly may analogously be configured to be utilised under weightlessness.

A spacecraft according to the present invention accordingly comprises a tank assembly according to an embodiment of the present invention.

In case the propellant tank is a plain tank, the propellant may be an amount of the hydrogen peroxide a portion of which is irradiated according to the present invention, said amount and said portion thus belonging to a common hydrogen peroxide volume, in particular being in a fluid connection with each other.

Indeed, in such case, at least during a time interval of the irradiating, the hydrogen peroxide within the (plain) propellant tank may include a sub- amount which remains unirradiated with the ultraviolet light. In particular, during such time interval, the at least one ultraviolet light may have a penetration depth into the hydrogen peroxide which penetration depth is smaller than an extension the irradiated hydrogen peroxide within the propellant tank has; as known in the art, such penetration depth (which depends on a power of the at least one ultraviolet light source, and on wavelengths of the ultraviolet light it emits, as mentioned above) can be calculated. In particular, a volume of the sub-amount which remains unirradiated (and which thus does not decompose, but is available as the propellant) may be governed by controlling the photolysis, as mentioned above, by selectively switching the at least one ultraviolet light source off (in particular to provide for undecomposed hydrogen peroxide remaining in the propellant tank) or on.

In case the propellant tank is a bladder tank, the propellant may preferably be contained in at least one propellant compartment separated, by at least one bladder, from an ullage of the bladder tank. The hydrogen peroxide a portion of which is irradiated or to be irradiated may then be contained in the ullage; the propellant within the at least one propellant compartment may then be further hydrogen peroxide, or it may be a substance different from hydrogen peroxide (such as ethanol or kerosene or another storable propellant).

The photolysis in such embodiments thus is provoked within the ullage. In particular, the at least one ultraviolet light source may then be arranged within the ullage, it may be at least partially integrated in a wall portion delimiting the ullage, or it may be arranged outside the ullage and configured to irradiate through a portion of a wall delimiting the ullage which portion is permeable for ultraviolet light. The at least one bladder preferably is impermeable for ultraviolet light, e.g., due to comprising pigmented (in particular, black) fluorinated ethylene propylene and/or pigmented (in particular, black) perfluoroalkoxy alkane.

A filling method according to the present invention serves to at least partially filling a tank with a propellant; for differentiation from the propellant tank further involved in the filling method, the tank filled by the filling method is further referred to as a "receiving propellant tank", and the same holds analogously for the filling system described below.

The filling method comprises carrying out a pressurisation method according to an embodiment of the present invention, and to thereby pressurise a propellant tank further referred to herein, due to its function, as a "supplying propellant tank". Therein, the supplying propellant tank is a bladder tank which contains a propellant in its at least one propellant compartment.

The filling method further comprises utilising a pressure increased, by way of the pressurisation method, in the supplying propellant tank for urging at least a portion of the propellant through a propellant transfer system (which may comprise one or various pipe/s) into the receiving tank (being different from said supplying propellant tank).

Analogously, a filling system according to the present invention serves for at least partially filling a receiving propellant tank with a propellant. The filling system comprises a tank assembly according to an embodiment of the present invention, the propellant tank of which serving as a supplying propellant tank and being configured as a bladder tank with an ullage and one or various propellant compartment/s. The filling system further comprises a propellant transfer system (which may comprise one or various pipe/s) connected or connectable to the propellant compartment or to at least one of the various propellant compartments, respectively, of the supplying propellant tank. The propellant transfer system is further releasably connectable to the receiving propellant tank (which may or may not be comprised by the filling system).

In particular, the filling system thus is configured to utilise a pressure increased, in the supplying propellant tank, by the photolysis to urge at least a portion of the propellant from the one or various propellant compartment/s through the propellant transfer system into the receiving propellant tank.

The filling method and the filling system advantageously facilitate transferring the propellant and thereby also conditioning a pressure within the receiving propellant tank in a simplified manner, dispensing with transfer pump/s and a utilisation of inert gas.

The receiving propellant tank, which preferably is smaller than the supplying propellant tank, may be configured as a plain tank or as a bladder tank. It may in particular be installed in a vehicle such as a spacecraft; in such case, the receiving propellant tank may serve to supply an engine of the vehicle with hydrogen peroxide originating from the receiving propellant tank. In particular, the filling method and the filling system according to the present invention thus may serve to (re-)fuel the vehicle.

In particular, the supplying propellant tank may form part of a fuel depot (loading station) or a tanker. The receiving propellant tank may be arranged or adapted to be arranged on a logistic transportation vehicle.

According to advantageous embodiments, the supplying propellant tank may be arranged or adapted to be arranged on a (space-) logistic transportation vehicle such as a spacecraft, space tug, orbiter or other type of space vehicle. In such cases, the filling method and the filling system thus are particularly advantageous if a transport of the receiving propellant tank is ineligible or at least disadvantageous, such as because the receiving propellant tank is stationarily installed or because a transport thereof is at least more difficult than a transport of the supplying propellant tank, e.g., due to a size of the receiving propellant tank or because it is included in a larger system such as a spacecraft, whereas on supplying propellant tank transport vehicle side, the avoidance of high pressure inert gas makes the system less complex and more reliable, in particular due to the fact that a high pressure vessel, a high pressure pressure-regulator, etc. especially in the case of the high-pressure refilling can be avoided. The filling method in such cases may comprise transporting the supplying propellant tank, by means of the logistic transportation vehicle, from a loading station (where the supplying propellant tank was at least partially filled) to the receiving propellant tank.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown is schematically in
- Fig. 1a:: an exemplary embodiment of a tank assembly according to the present invention in a first state;
- Fig. 1b:: the tank assembly of Fig. 1a in a second state;
- Fig. 2a:: another exemplary embodiment of a tank assembly according to the present invention in a first state;
- Fig. 2b:: the tank assembly of Fig. 2a in a second state;
- Fig. 3a:: a further exemplary embodiment of a tank assembly according to the present invention in a first state;
- Fig. 3b:: the tank assembly of Fig. 3a in a second state; and
- Fig. 4:: a filling system according to an exemplary embodiment of the present invention.

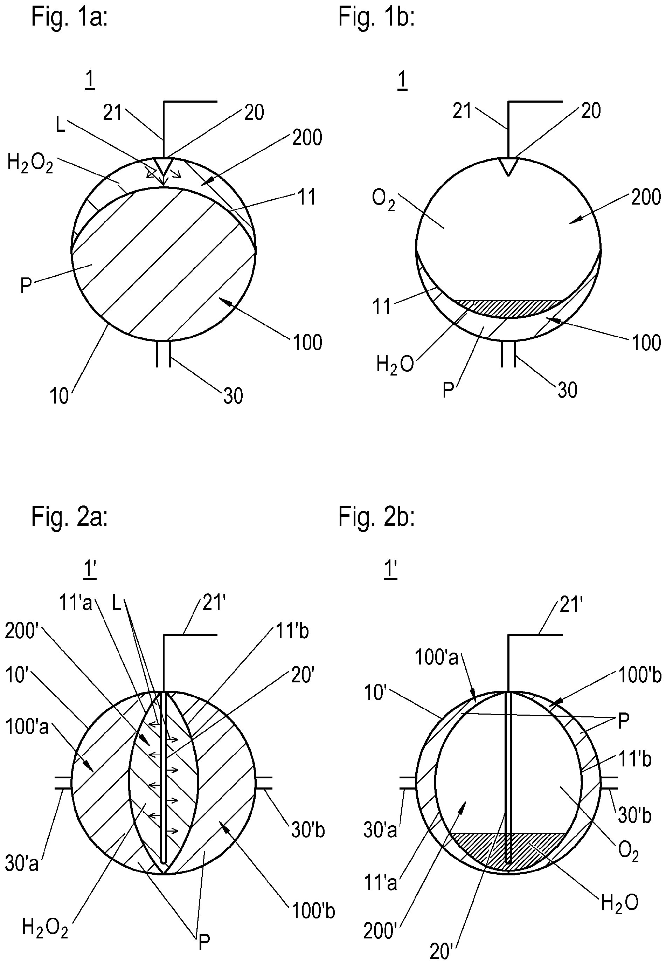

Figures 1a and 1b schematically illustrate a tank assembly 1 according to a first embodiment of the present invention in respective situations. The tank assembly 1 comprises a propellant tank 10 configured as a bladder tank, and an ultraviolet light source 20 which is electrically connected to a power source (not shown) by an electric line 21.

Preferably, a (not shown) protection which is transparent for ultraviolet light (i.e., which unhamperedly lets the ultraviolet light L pass through and which has an ultraviolet light permeability of at least 90% or at least 95% or at least 97%) at least partially covers the ultraviolet light source 20 so as to protect it against damage and/or impacts of hydrogen peroxide H₂O₂ in its vicinity.

The ultraviolet light source 20 is arranged in an ullage 200 of the propellant tank 10, which ullage 200 is separated by a bladder 11 from a propellant compartment 100 of the propellant tank 10. The bladder preferably is impermeable for ultraviolet light. In particular, it may advantageously comprise pigmented fluorinated ethylene propylene and/or pigmented (black) perfluoroalkoxy alkane.

A closable propellant transfer system 30, only a portion of which is shown in Figures 1a, 1b connects the propellant compartment 100 with another unit (not shown) such as another vessel or a consumer unit (e.g., an engine to be driven by the propellant).

In the situation depicted in Figure 1a, the ullage 200 contains hydrogen peroxide H₂O₂, and the propellant compartment 100 is filled with a propellant P which may be further hydrogen peroxide, ethanol, kerosene, or another storable propellant. The ultraviolet light source 20 irradiates at least some of the hydrogen peroxide H₂O₂ within the ullage 200 with ultraviolet light L.

Thereby, a photolysis is provoked (not visible in Figure 1a) which causes the hydrogen peroxide H₂O₂ within the ullage 200 to at least partially decompose into gaseous oxygen and water, these decomposition products together having a larger volume than the amount of irradiated hydrogen peroxide H₂O₂ they originate from. As a consequence, a pressure within the propellant tank 10 raises. By selectively switching the ultraviolet light source 20 on or off, a respectively required pressure within the propellant tank 10 can be adjusted.

Figure 1b depicts a situation in which the hydrogen peroxide H₂O₂ previously contained in the ullage 200 has (at least almost) completely decomposed into oxygen O₂ and water H₂O now contained in the ullage 200.

Therein, the pressure increased by the photolysis has been utilised to urge a portion of the propellant P, through the opened propellant transfer system 30, to another unit (not shown). The propellant transfer could be carried out without involvement of a pump. As apparent from a comparison of Figures 1a and 1b, it caused a volume reduction of the propellant compartment 100 and a volume raise of the ullage 200.

Figures 2a, 2b similarly illustrate a tank assembly 1' according to a second embodiment of the present invention in respective situations. The tank assembly 1' comprises a propellant tank 10' configured as a bladder tank which in this case includes two propellant compartments 100'a, 100'b separated from an ullage 200' by respective bladders 11'a, 11'b which preferably are impermeable for ultraviolet light.

In the situation depicted in Figure 2a, the ullage 200' contains hydrogen peroxide H₂O₂, and the propellant compartments 100'a, 100'b are filled with a propellant P which may be further hydrogen peroxide, ethanol, kerosene, or another storable propellant. Though not shown in Figures 2a, 2b, propellant compartments 100'a, 100'b of such tank assembly 1' might even contain different propellants.

The tank assembly 1' further comprises an ultraviolet light source 20' which in this case is configured as a bar extending into an interior of the ullage 200' and which is connected to a (not shown) power source by an electric line 21'. Analogously to what is described above with respect to Figure 1a, 1b, the ultraviolet light source 20' preferably is at least partially covered with a (not shown) protection which is transparent for ultraviolet light.

As illustrated in Figure 2a, the ultraviolet light source 20' irradiates at least some of the hydrogen peroxide H₂O₂ within the ullage 200' with ultraviolet light L.

The irradiation will provoke a photolysis causing the hydrogen peroxide H₂O₂ within the ullage 200' to at least partially decompose into oxygen and water. As a consequence, a pressure within the propellant tank 10' raises. By selectively switching the ultraviolet light source 20' on or off, a respectively required pressure within the propellant tank 10' can be adjusted.

Figure 2b depicts a situation in which the hydrogen peroxide H₂O₂ previously contained in the ullage 200' has (at least almost) completely decomposed into oxygen O₂ and water H₂O now contained in the ullage 200'.

Therein, the pressure increased by the photolysis has been utilised to urge a portion of the propellant P, through opened propellant transfer systems 30'a, 30'b, from the propellant compartments 100'a, 100'b to at least one further unit (not shown). This propellant transfer could be carried out without involvement of a pump. As apparent from a comparison of Figures 2a and 2b, it caused a volume reduction of the propellant compartments 100'a, 100'b and a volume raise of the ullage 200'.

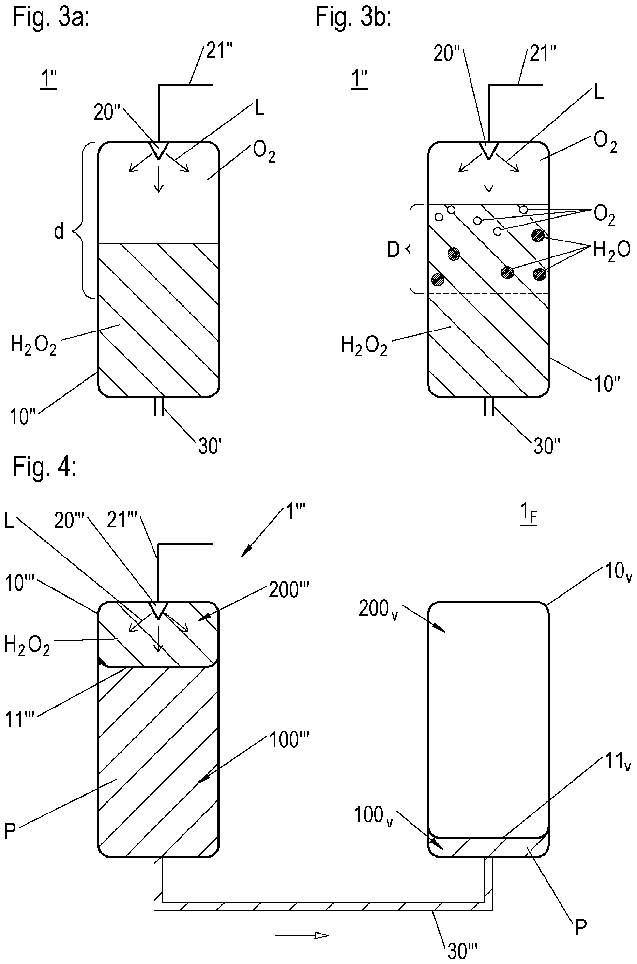

In Figures 3a, 3b a tank assembly 1" according to a further embodiment of the present invention is schematically shown in respective situations. The tank assembly 1'' comprises a propellant tank 10'' which in this embodiment is a plain tank, and an ultraviolet light source 20" connected to a (not shown) electric power source by an electric line 21" . Again, the ultraviolet light source 20" may preferably be at least partially covered with a protection which is transparent for ultraviolet light.

In the situations shown in Figures 3a, 3b, the propellant tank 10'' contains hydrogen peroxide H₂O₂ and gaseous oxygen O₂. At least some of the hydrogen peroxide H₂O₂ is irradiated, by the ultraviolet light source 20", with ultraviolet light L.

Figure 3a depicts a beginning of the irradiation, and it illustrates a penetration depth d of the ultraviolet light L into the hydrogen peroxide H₂O₂, the penetration depth d depending on a power of the at least one ultraviolet light source 20'', and on wavelengths of the ultraviolet light L it emits.

As apparent from Figure 3a, a sub-amount of the hydrogen peroxide H₂O₂ which is located beyond the penetration depth d is not reached by the ultraviolet light L. As a consequence, the irradiation will not cause the hydrogen peroxide H₂O₂ of this sub-amount to decompose.

Figure 3b illustrates the tank assembly 1" in a more advanced state of the irradiation. In this situation, some of the hydrogen peroxide H₂O₂ has decomposed by the photolysis caused by the irradiation. As a consequence, bubbles of gaseous oxygen O₂ and bubbles of water H₂O have emerged within a decomposition depth D of the hydrogen peroxide, and the gaseous oxygen O₂ has been compressed.

Thereby, a pressure in the propellant tank 10'' has been increased. The pressure raise may then be used to urge at least some of the hydrogen peroxide H₂O₂ through a propellant transfer system 30" to another unit such as an engine of a vehicle (in particular, of a spacecraft, for example) or another vessel (not shown).

In Figure 4, a filling system 1_{F} according to an exemplary embodiment of the present invention is depicted. The filling system 1_{F} comprises a tank assembly 1''' according to an embodiment of the present invention, a propellant tank 10_{V} serving, in the filling system 1_{F}, as a receiving propellant tank, and a propellant transfer system 30‴ connecting the tank assembly 1‴ and the receiving propellant tank 10_{V} to which the propellant transfer system 30‴ is releasably connected.

The tank assembly 1‴ comprises a propellant tank 10''' which in this case serves as a supplying propellant tank and which is configured as a bladder tank including a propellant compartment 100''' and an ullage 200‴ with are separated from each other by a bladder 11‴. Preferably, the propellant tank 10''' is adapted to be arranged on a logistic transportation vehicle such as a truck, a goods wagon, or a freighter (not shown). The tank assembly 1'" further comprises an ultraviolet light source 20‴ which is connected to a (not shown) electric power source by an electric line 21' .

Also the receiving propellant tank 10_{V} is configured as a bladder tank, having a bladder 11_{V} partitioning an interior of the propellant vessel 10_{V} into a propellant compartment 100_{V} and an ullage 200_{V}. The ullage 200_{V} preferably is filled with gas such as oxygen. The propellant vessel 10_{V} in particular may be installed in a vehicle such as a spacecraft (not shown).

In the situation depicted in Figure 4, the propellant compartment 100''' of the tank assembly 1''' is filled with a propellant P (such as hydrogen peroxide, ethanol, kerosene, or another storable propellant), and the ullage 200" of the tank assembly 1'" contains hydrogen peroxide H₂O₂ at least some of which is irradiated, by the ultraviolet light source 20''', with ultraviolet light L.

As a consequence, a photolysis and, thereby, a decomposition of at least some of the hydrogen peroxide H₂O₂ within the ullage 200‴ into oxygen and water will be caused (not shown), such that a pressure in the propellant tank 1‴, in particular in its ullage 200‴ will increase. The thus increased pressure may then be utilised to urge, preferably without involvement of a propellant pump, at least some of the propellant P through the propellant transfer system 30‴ into the receiving propellant tank 10_{V}, in particular, into the propellant compartment 100''' thereof.

In this way, the receiving propellant tank 10_{V} can be at least partially filled.

The receiving propellant tank 10_{V} may preferably comprise a pressurisation system (not shown) advantageously facilitating a subsequent extraction of the gas. In particular, the receiving propellant tank 200_{V} may be constructed analogous to the supplying propellant tank. It may thus be configured to contain hydrogen peroxide in its ullage 200_{V}, and it may comprise at least one ultraviolet light source configured to irradiate this hydrogen peroxide with ultraviolet light (not shown).

Disclosed is a pressurisation method for increasing a pressure within a propellant tank 10, 10', 10", 10‴ containing hydrogen peroxide H₂O₂. The pressurisation method comprises irradiating at least some of the hydrogen peroxide H₂O₂ with ultraviolet light L emitted by at least one ultraviolet light source 20, 20', 20", 20‴. Thereby, a photolysis is actively provoked which causes the irradiated hydrogen peroxide H₂O₂ to at least partially decompose into water H₂O and gaseous oxygen O₂.

Further disclosed are a filling method for at least partially filling a receiving propellant tank 10_{V} by applying such pressurisation method, a tank assembly 1, 1', 1", 1‴, a filling system 1_{F}, and a spacecraft.

### Reference signs

1, 1', 1", 1‴ tank assembly
1_{F} filling system
10, 10' , 10", 10‴ propellant tank
10_{V} receiving propellant tank
11, 11'a, 11'b, 11‴, 11_{V} bladder
20, 20', 20'', 20‴ ultraviolet light source
21, 21', 21'', 21‴ electric line
30, 30'a, 30'b, 30", 30‴ propellant transfer system
100, 100'a, 100'b, 100‴, 100_{V} propellant compartment
200, 200', 200‴, 200v ullage
d light penetration depth
D decomposition depth
L ultraviolet light
P propellant

## Claims

1. Pressurisation method for increasing a pressure within a propellant tank (10, 10', 10", 10‴) containing hydrogen peroxide (H₂O₂), the pressurisation method comprising irradiating at least some of the hydrogen peroxide with ultraviolet light (L) emitted by at least one ultraviolet light source (20, 20', 20" , 20‴), thereby provoking a photolysis causing the irradiated hydrogen peroxide (H₂O₂) to at least partially decompose into water (H₂O) and gaseous oxygen (O₂).

2. Pressurisation method according to claim 1, wherein the at least one ultraviolet light source (20, 20', 20" , 20‴) is at least partially covered with a protection which is transparent for ultraviolet light and made of at least one of
- fluorinated ethylene propylene,
- a perfluoroalkoxy alkane, and/or
- a transparent metal which is compatible with hydrogen peroxide, and/or
- a transparent ceramic which is compatible with hydrogen peroxide.

3. Pressurisation method according to one of claims 1 or 2, further comprising controlling the photolysis by selectively switching the at least one ultraviolet light source (20, 20', 20", 20‴) on or off and/or controlling a dimmer of the at least one ultraviolet light source.

4. Pressurisation method according to one of the preceding claims, wherein the propellant tank (10'') is a plain tank.

5. Pressurisation method according to one of claims 1 to 3,
wherein the propellant tank (10, 10', 10‴) is a bladder tank whose at least one bladder (11, 11'a, 11'b, 11‴) separates an interior of the propellant tank into
- one or various propellant compartment/s (100, 100'a, 100'b, 100‴) containing a propellant (P) and
- an ullage (200, 200', 200‴) containing the hydrogen peroxide (H₂O₂) at least some of which is irradiated.

6. Pressurisation method according to claim 5, wherein the propellant (P) is hydrogen peroxide.

7. Pressurisation method according to one of the preceding claims, wherein the propellant tank (10, 10', 10") is installed in a vehicle such as a spacecraft.

8. Filling method for at least partially filling a receiving propellant tank (10_{V}), the method comprising carrying out a pressurisation method according to one of claims 5 or 6, thereby pressurising a supplying propellant tank (10‴), and utilising a thus increased pressure within the supplying propellant tank (10''') for urging at least some of the propellant (P) through a propellant transfer system (30) into the receiving propellant tank (10_{V}).

9. Tank assembly (1, 1', 1", 1‴) comprising
- a propellant tank (10, 10', 10", 10''') configured to contain hydrogen peroxide (H₂O₂), and
- at least one ultraviolet light source (20, 20', 20" , 20‴) configured to emit ultraviolet light (L) irradiating at least some of the hydrogen peroxide (H₂O₂) respectively contained in the propellant tank (10, 10', 10‴), thereby provoking a photolysis thereof into water (H₂O) and gaseous oxygen (O₂).

10. Tank assembly (1, 1', 1", 1‴) according to claim 9, wherein the at least one ultraviolet light source (20, 20', 20", 20‴) is at least partially covered by a protection which is transparent for ultraviolet light (L) and at least partially made of
- fluorinated ethylene propylene,
- a perfluoroalkoxy alkane, and/or
- a transparent metal which is compatible with hydrogen peroxide, and/or
- a transparent ceramic which is compatible with hydrogen peroxide.

11. Tank assembly (1, 1', 1", 1‴) according to one of claims 9 or 10, further comprising a tank pressure control system configured to arrange for the pressure within the propellant tank (10, 10', 10", 10''') being in a predefined range by automatically switching the at least one ultraviolet light source (20, 20', 20" , 20‴) selectively on or off, and/or by automatically dimming the at least one ultraviolet light source.

12. Tank assembly (1") according to one of claims 9 to 11, wherein the propellant tank (10'') is a plain tank.

13. Tank assembly (1, 1', 1‴) according to one of claims 9 to 11, wherein the propellant tank (10, 10', 10‴) is a bladder tank whose at least one bladder (11, 11'a, 11'b, 11''') partitions an interior of the propellant tank into
- one or various propellant compartment/s (100, 100'a, 100'b, 100‴) configured to contain a propellant (P) and
- an ullage (200, 200', 200‴) containing the irradiated hydrogen peroxide (H₂O₂).

14. Filling system (1_{F}) for at least partially filling a receiving propellant tank (10_{V}), the filling system comprising
- a tank assembly (1‴) according to claim 13, whose propellant tank (10‴) is designated as a supplying propellant tank, and
- a propellant transfer system (30) connected or connectable to at least one of the propellant compartment/s (100, 100'a, 100'b, 100''') of the supplying propellant tank (10''') of the tank assembly (1‴) and releasably connectable to the receiving propellant tank (10_{V}).

15. Spacecraft comprising a tank assembly (1, 1', 1'') according to one of claims 9 to 13.
